# EUROPEAN PATENT SPECIFICATION

(11) **EP 3 556 706 B1**
(45) Date of publication and mention of the grant of the patent: **27.11.2024**
(21) Application number: 18382860.7
(22) Date of filing: 28.11.2018
(51) Int. Cl.: B66B 7/02

(54) **BRACKET ASSEMBLY ADJUSTABLE TO THE THICKNESS OF THE WING OF A LIFT GUIDE**
AN DIE DICKE DES FLÜGELS EINES AUFZUGS ANPASSBARE KLAMMER
BRIDE RÉGLABLE À L'ÉPAISSEUR DE L'AILE D'UN GUIDE D'ASCENSEUR

(30) Priority: 16.04.2018 ES 201830372
(43) Date of publication of application: 23.10.2019
(73) Proprietor: S.A. de Vera ( Savera), 31780 Bidasoa (Guipuzcoa) (ES)
(72) Inventor: FERNANDEZ, JOSE ENRIQUE, 31780 BIDASOA (GUIPUZCOA) (ES)
(74) Representative: Urizar Barandiaran, Miguel Angel

(56) References cited:
- EP-A1- 3 381 856
- WO-A1-2017/103017
- ES-A1- 2 557 505

## Description

### Object of the invention

The object of the invention refers to a bracket assembly, adjustable to the possible variations in thickness of the wing of a lift guide, with high resistance and low friction force.

### Background of the invention

In the current state of the art, bracket assemblies are already known that are capable of supporting the stresses produced in the different operating conditions of a lift. The applicant is a holder, among others, of the preceding documents ES2257118, ES2255370 and ES2492791.

Adaptable bracket assemblies with low friction are also known, which prevent transmission to the guides effects such as compression or movements of the building, or defects such as maladjustments due, for example, to misalignments of the wall of the building. The applicant is a holder, among others, of the preceding documents ES2421083, and ES2557505.

All these known bracket assemblies are constituted using several pieces of shaped metal sheet that define a fastening assembly for the wings of the guide, and means (normally screws or sets of screws/nuts) for the fastening of said pieces both to each other and to the supports used for the fastening of the assembly to the wall.

Each of the different solutions involve solving specific problems. The objective of the bracket assemblies is to obtain effective fastening supporting maximum strain with minimum friction.

### Technical problem to be resolved

Problems posed by riding paths or guide paths of the moving components of a lift arise due to external conditioning such as settling of the building, action of the safety gear or the resistance of the bracket assembly itself (which is not very high).

### Object of the invention

The object of the invention refers to a bracket assembly, adjustable to the possible variations in thickness of the wing of a lift guide, with high resistance and low friction force.

### Background of the invention

In the current state of the art, bracket assemblies are already known that are capable of supporting the stresses produced in the different operating conditions of a lift. The applicant is a holder, among others, of the preceding documents ES2257118, ES2255370 and ES2492791.

Adaptable bracket assemblies with low friction are also known, which prevent transmission to the guides effects such as compression or movements of the building, or defects such as maladjustments due, for example, to misalignments of the wall of the building. The applicant is a holder, among others, of the preceding documents ES2421083, and ES2557505.

All these known bracket assemblies are constituted using several pieces of shaped metal sheet that define a fastening assembly for the wings of the guide, and means (normally screws or sets of screws/nuts) for the fastening of said pieces both to each other and to the supports used for the fastening of the assembly to the wall.

Each of the different solutions involve solving specific problems. The objective of the bracket assemblies is to obtain effective fastening supporting maximum strain with minimum friction.

### Technical problem to be resolved

Problems posed by riding paths or guide paths of the moving components of a lift arise due to external conditioning such as settling of the building, action of the safety gear or the resistance of the bracket assembly itself (which is not very high).

In the current state of the art, a problem in ensuring that bracket assemblies allow high loads having low friction forces is that the guide wings where the bracket assemblies are fastened can have different thicknesses due to the manufacturing tolerances or to the grouping of different guide sizes to be used by the same bracket assembly reference.

### Description of the invention

The object of the invention is included within this industrial sector. The invention is a bracket assembly according to claim 1.

From this basic structure, any alternative embodiments that do not essentially alter, change of modify the proposal are included in the object of the invention.

In particular, further embodiments of the bracket assembly may include that:
- the mentioned fastening assembly is structured in a single piece of sheet metal folded in "Z" shape, one of whose wings rests on the adjuster assembly while the other one has a polygonal orifice to accommodate the non-turning screw and rests on the support in that the core stops against the edge of the corresponding guide wing;
- the mentioned adjuster assembly is structured in a single piece of sheet metal folded, the "L" shape whose smaller wing consists of a handle to facilitate guided movement and whose larger wing has a long orifice to accommodate the aforementioned fastening element and a window to accommodate the fastening assembly; having at least one ridge in its end zone to adapt to wings of different thicknesses;
- it has means to generate a force between the fastening assembly and the support on fastening them to each other with the aforementioned screw, said means being pins that emerge from said metal sheet and are slightly inclined with respect to the plane of said wing; so that, on tightening the nut/washing on the screw, the core of the fastening assembly tends to separate from the edge of the wing to offer minimal friction;

Alternatively, the bracket assembly which is object of the invention is also characterized in that the fastening assembly is structured in a single piece of sheet metal folded in "Z" shape one of whose wings rests on the adjuster assembly while the other one has a polygonal orifice to accommodate the screw and rests on the support as the core defines a window for housing the adjuster assembly and stops against the edge of the corresponding guide wing.

Alternatively, the bracket assembly which is object of the invention is also characterized in that the mentioned adjuster assembly is structured in a single piece of sheet metal folded, the "L" shape whose smaller wing consists of a handle to facilitate guided movement and whose larger wing has a long orifice to accommodate the fastening element; having at least one ridge in its end zone to adapt to the wings of different thicknesses.

It makes no difference for the purposes of the invention that the orifice of the wing of the piece of sheet metal that rests on the support is not polygonal; in which case it is the slit orifice of the support that accommodates the polygonal portion of the non-turning screw to fasten the fastening assembly and the assembly adapting to the support using a nut/washer set.

It also makes no difference for the purposes of the invention that the screw and the fastening element are formed from the same base-piece, or that they are two independent pieces assembled to each other.

Other configurations and advantages of the invention can be deduced from the following description, and from the dependent claims.

### Description of the drawings

To better understand the object of the invention, a preferential form of embodiment, subject to accessory changes which do not essentially alter it, is represented in the attached figures. In this case:
Figure 1 represents a general view in perspective of a lift guide (G) arranged on a support (S) using two brackets according to the invention fastening their respective wings (G1).
Figure 2a represents a view in perspective of the bracket assembly, object of the invention, with its fastening assembly (1) and its adaptor assembly (2) mounted and positioned but without representing the lift guide (G) nor the support (S) where the assembly is positioned.
Figure 2b represents a view similar to figure 2a, with its components in arrangement of assembly.
Figure 3a represents a plan view with the bracket assembly of the invention in pre-assembly phase.
Figure 3b represents a plan view with the bracket assembly of the invention in approach phase.
Figure 3c represents a plan view with the bracket assembly of the invention in adaptation phase.
Figure 3d represents a plan view with the bracket assembly of the invention in final phase.
Figure 4a represents a view in perspective of the bracket assembly which is the object of the invention, similar to figure 2a, for an alternative embodiment.
Figure 4b represents a view in perspective of the bracket assembly which is the object of the invention, similar to figure 2b, for an alternative embodiment.
Figure 5a represents a view in perspective of the screws (3), (4) for an alternative embodiment.
Figure 5b represents a view in perspective of the fastening assembly (1) for the alternative embodiment of the screws (3), (4) represented in figure 5a.
Figure 5c represents a plan view similar to figure 3d, for the alternative embodiment that uses the fastening assembly (1) and the screws (3), (4) of figures 5a and 5b.
Figure 6 represents a view in perspective for an alternative embodiment in which the screws (3), (4) are two independent pieces.

### Detailed description of a preferential embodiment

The following describes an example of practical, non-limiting embodiment of this invention.

Other modes of embodiment in which accessory changes which do not essentially change it are introduced are in no way disregarded.

The object of the invention is a bracket assembly adjustable to the thickness of the wing of a lift guide. There is a bracket for each wing (G1) of the lift guide (G), said guide resting (G) on a support (S) with orifices (S1) on which the assembly is fastened using a tightened screw (3) using a nut/washer set (T1).

According to the invention, the bracket assembly is as defined in claim 1.

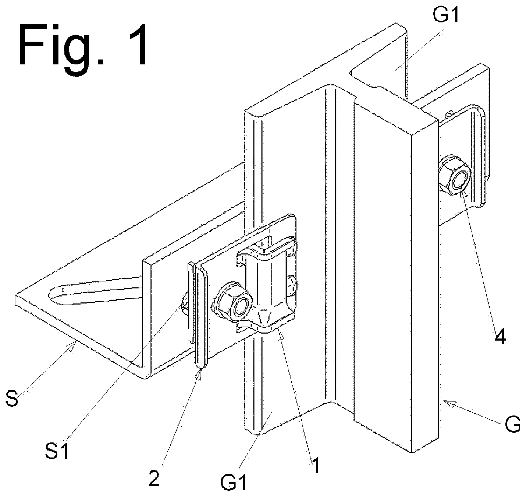

According to the embodiment represented in figures 1 to 3, the mentioned fastening assembly (1) has a single piece of sheet metal folded in "Z" shape that defines a core (11b) and two wings (11a), (11c).

One of these wings (11a) has a polygonal orifice (10) to accommodate a non turning screw (3) and rests on the support (S). It also has pins (12) slightly inclined with respect to the plane of said wing (11a).

The core (11b) stops against the edge of the corresponding wing (G1) of the guide (G).

The other wing (11c) rests on the adjuster assembly (2).

According to the embodiment represented in figures 1 to 3, the mentioned adjuster assembly (2) has a single piece of sheet metal folded, the "L" shape whose smaller wing (21b) has a handle to facilitate guided movement and whose larger wing (21a) has a long orifice (22) and a window (23).

In the smaller wing (21b) there is also at least a ridge (24) at its end zone; said ridge running (24) oriented toward the same side as the smaller wing (21b).

According to embodiment represented in figures 1 to 3, there are means (12) to generate a force between the fastening assembly (1) and the support (S) that counteracts and reduces the frontal friction between the fastening assembly (1) and the wing (G1). In the embodiment represented, said means are pins (12) slightly inclined with respect to the plane of the wing (11a) of the fastening assembly (1) where they are located.

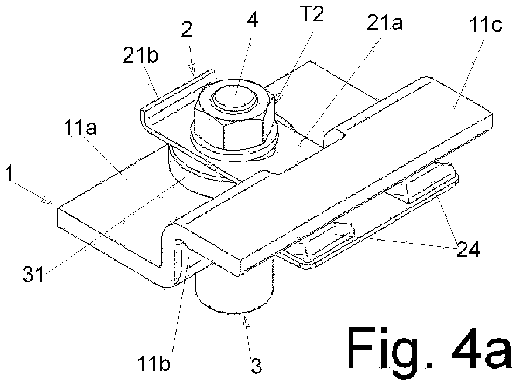

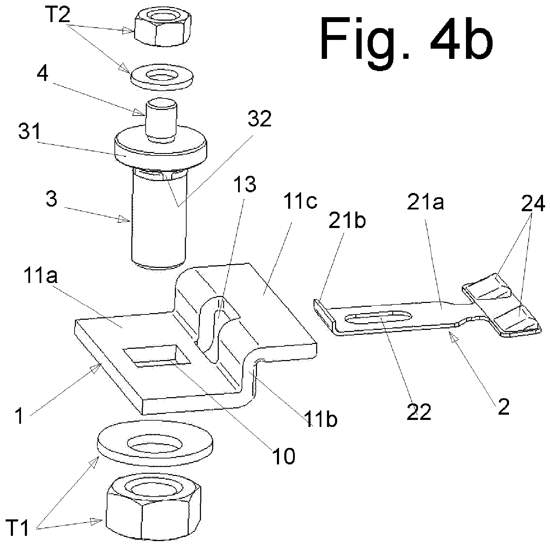

According to the embodiment represented in figures 4a and 4b, the mentioned fastening assembly (1) has a single piece of sheet metal folded in "Z" shape that defines a core (11b) and two wings (11a), (11c).

One of these wings (11a) has a polygonal orifice (10) to accommodate the non-turning screw (3) and rests on the support (S).

The core (11b) defines a window (13) to house the adjuster assembly (2) and stops against the edge of the corresponding wing (G1) of the guide (G).

The other wing (11c) rests on the adjuster assembly (2).

The fastening assembly (1) and the support (S) are fastened to each other using the nut/washer (T1).

According to the embodiment represented in figures 4a and 4b, the mentioned adjuster assembly (2) has a single piece of sheet metal folded, the "L" shape whose smaller wing (21b) consists of a handle to facilitate guided movement and whose larger wing (21a) has a long orifice (22).

In the smaller wing (21b) there is also at least one ridge (24) in its end zone; said ridge (24) being oriented toward the same side as the smaller wing (21b).

In any of the embodiments, the mentioned screw (3) defines under its head (31) a portion (32) of polygonal geometry; and the fastening element (4) is extended axially with respect to the screw (3).

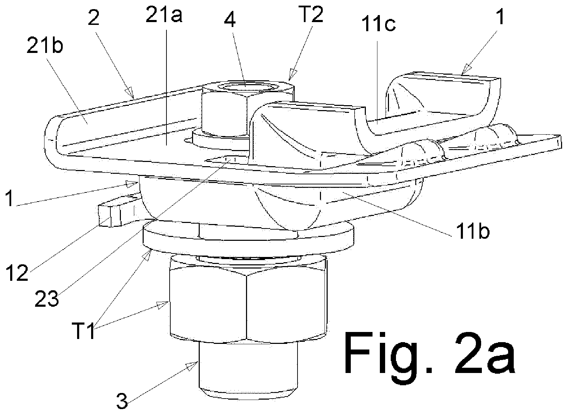

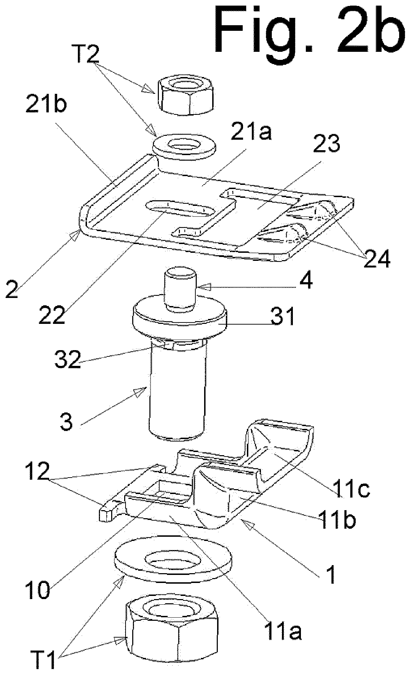

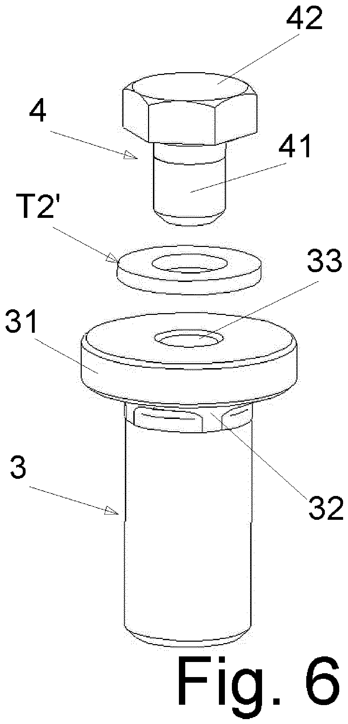

It makes no difference for the purposes of the invention:
- that the screw (3) and the fastening element (4) are formed from the same base-piece, as in figures 2b, 4b and 5a; or
- that they are two independent pieces, assembled to each other; for example, that the screw (3) defines a threaded orifice (33) in which the fastening element (4) is placed, which is a commercial screw with its own head (42), that accommodates its threaded zone (41) in the threaded orifice (33) with interposition of washer (T2'), as in figure 6.

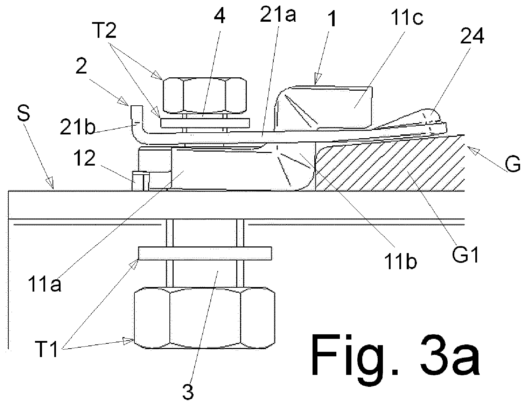

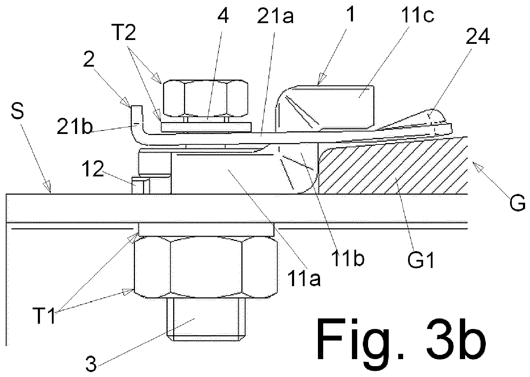

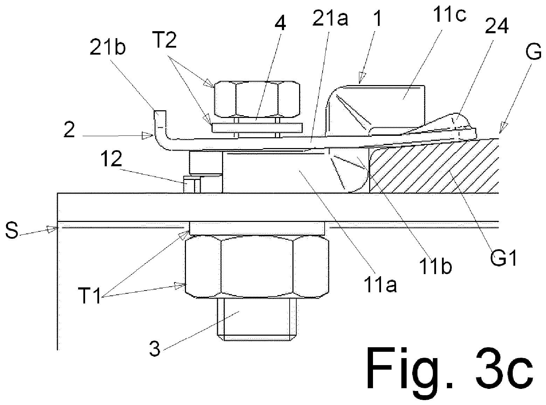

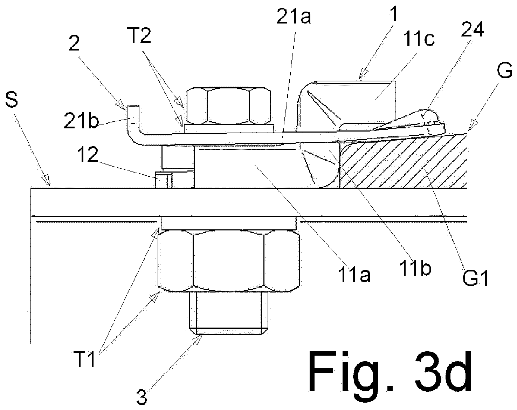

in any of the embodiments:
a) in pre-assembly phase (see figure 3a):
   - the adjuster assembly (2) is guided in the fastening assembly (1). The fastening element (4) is accommodated in the long orifice (22) of the adjuster assembly (2) which is left with clearance with respect to the fastening assembly (1) while the nut/washer set (T2) is loose;
   - the fastening assembly (1) and the adjuster assembly (2) are arranged on the support (S) for which the screw (3) is accommodated in the orifice (S1) the wing (G1) of the guide (G) remaining clamped between them and the support (S) with clearance while nut/washer set (T1) is loose;
   - the wing (11a) of the fastening assembly (1) is left with its pins (12) resting on the support (S) and with its core (11b) stopping against the wing (G1) of the guide (G); the wing (11c) of the fastening assembly (1) is left resting on the wing (21a) of the adjuster assembly (2) and it rests on the wing (G1) of the guide (G).
b) in approach phase (see figure 3b):
   - to fasten on the fastening assembly (1) the support (S) the nut/washer set (T1) is tightened so that the arms (12) are deformed, generating a force between them and the support (S) that counteracts and reduces the frontal friction between the core (11b) and the edge of the guide (G1).
c) in adaptation phase (see figure 3c):
   - the adjuster assembly (2) moves linearly pulling from its wing (21b) until the ridge or ridges (24) fit between the wing (G1) of the guide (G) and the wing (11c) of the fastening assembly (1). The movement will be different according to the thickness of the wing (G1); thus, adapting the bracket assembly to wings (G1) of different thicknesses.
d) in the final phase (see figure 3d):
   - the nut/washer set (T2) is tightened, fastening the adjuster assembly (2) to the rest of the bracket assembly.

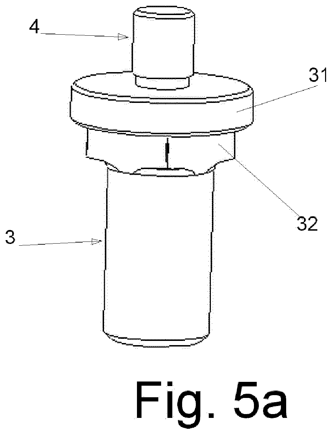

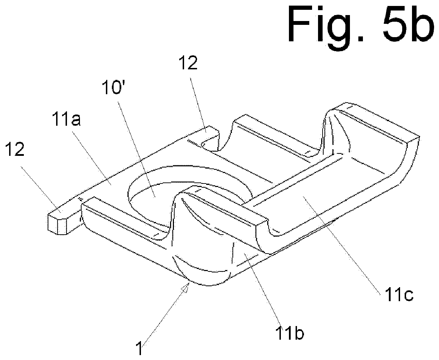

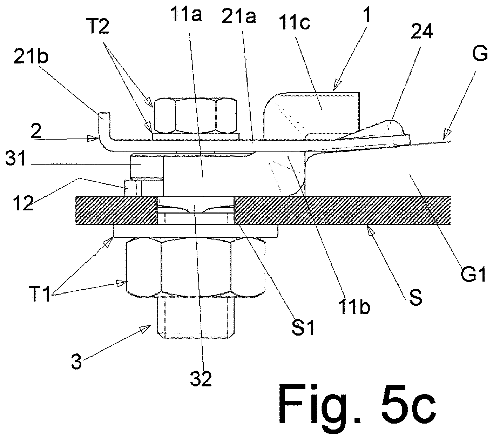

In any of the embodiments, the bracket assembly which is the object of the invention is fastened with respect to the support (S). The specific way in which said fastening is achieved makes no difference for the purposes of the invention. Thus:
- in the example of the embodiment of the figures 2b and 4b, the portion (32) defined under the head (31) of the screw (3) is accommodated in the polygonal orifice (10) defined in the wing (11a) of the piece of sheet metal that constitutes the fastening assembly (1).
- in the example of embodiment of the figures 5a and 5b, the portion (32) defined under the head (31) of the screw (3) is of greater height; the orifice (10') defined in the wing (11a) of the piece of sheet metal that constitutes the fastening assembly (1) is circular while the orifice (S1') defined in the support (S) is always long. The threadless fastening takes place by accommodating the portion (32) of the screw (3) in the orifice (S1') of the support (S) so that two opposite sides of said orifice (S1) accompany two opposite sides of the portion (32). See figure 5c.

The materials, dimensions, proportions and, in general, those other accessory or secondary details that do not essentially alter, change or modify the proposal may vary.

The terms in which this report is written are a true and faithful reflection of the object described, and must be taken in their broadest sense and never in a limiting manner.

## Claims

1. A bracket assembly, adjustable to the thickness of the wing of a lift guide; of the type that has a bracket for each wing (G1) of the lift guide (G), said guide (G) resting on a support (S) that has orifices (S1) in which the assembly is fastened; wherein the bracket assembly has:
a) a fastening assembly (1) and an adjuster assembly (2) arranged to be fastened to each other and the support (S) to the wing (G1) of the guide (G); the adjuster assembly (2) being subject to guided linear movement with respect to the fastening assembly (1) to adapt to wings (G1) of different thicknesses; the fastening assembly (1) and the wing (G1) being stopped against each other, with frontal friction;
b) a non-turning screw (3) that mounts on the fastening assembly (1) or on the support (S) to fasten them to each other; and
c) a fastening element (4) that joined to the screw (3), is accommodated in a long orifice (22) of the adjuster assembly (2) allowing the guided movement of the adjuster assembly (2) in the fastening assembly (1); and then to fasten between them the adjuster assembly (2) and the fastening assembly (1).

2. A bracket assembly, as defined in claim 1, **characterized in that** the mentioned fastening assembly (1) has a single piece of sheet metal folded in "Z" shape, one of whose wings (11c) rests on the adjuster assembly (2) while the other wing (11a) has a polygonal orifice (10) to accommodate the non-turning screw (3) and rests on the support (S) while the core (11b) stops against the edge of the corresponding wing (G1) of the guide (G).

3. A bracket assembly, as defined in claim 2, **characterized in that** the mentioned adjuster assembly (2) has a single piece of sheet metal folded, the "L" shape whose smaller wing (21b) has a handle to facilitate the guided movement and whose larger wing (21a) has a long orifice (22) to accommodate the fastening element (4) and a window (23) to house the fastening assembly (1); having at least one ridge (24) in its end zone to adapt to wings (G1) of different thicknesses.

4. A bracket assembly, as defined in claim 1, **characterized in that** it has means (12) to generate a force between the fastening assembly (1) and the support (S) that, on fastening them to each other, counteracts and reduces the frontal friction between the fastening assembly (1) and the wing (G1); the aforementioned means are being (12) arms which extend from the aforementioned piece of sheet metal and slightly inclined with respect to the plane of the aforementioned wing (11a); so that, on tightening a nut/washer (T1) on the non-turning screw (3) to fasten between them the fastening assembly (1) and support (S), the core (11b) tends to separate from the edge of the wing (G1).

5. A bracket assembly, as defined in claim 2, **characterized in that** the mentioned fastening assembly (1) is a single piece of sheet metal folded in "Z" shape, one of whose wings (11c) rests on the adjuster assembly (2) while the other wing (11a) is equipped with a polygonal orifice (10) to accommodate the non-turning screw (3) and rests on the support (S) while the core (11b) defines a window (13') to house the adjuster assembly (2) and stops against the edge of the corresponding wing (G1) of the guide (G).

6. A bracket assembly, as defined in claim 5, **characterized in that** the mentioned adjuster assembly (1) has a single piece of sheet metal folded in the "L" shape, whose smaller wing (21b) comprises a handle to facilitate guided movement and whose larger wing (21a) has Z the long orifice (22) to accommodate the fastening element (4); having at least one ridge (24) in its edge zone to adapt to wings (G1) of different thicknesses.

7. A bracket assembly, according to one of the foregoing claims, **characterized in that** the wing (11a) of the piece of sheet metal has an orifice (10') and rests on the support (S) with a polygonal orifice (S1') to accommodate the non turning screw (3).

8. A bracket assembly, according to one of the foregoing claims, **characterized in that** the non-turning screw (3) and the fastening element (4) are threaded portions formed from a single base piece, each of them having respective nut/washer sets (T1), (T2).

9. A bracket assembly, according one of the foregoing claims, **characterized in that** the non-turning screw (3) carries in its head (31) a threaded orifice (33) in which there is the fastening element (4) which is an independent screw; the fastening assembly (1) and the adjuster assembly (2) are being held between their respective heads (31), (42).

## Patentansprüche

1. Halterungsbaugruppe, die an die Dicke des Flügels einer Hebeführung einstellbar und von einem Typ ist, der für jeden Flügel (G1) der Hebeführung (G) eine Halterung aufweist, wobei die Führung (G) auf einer Stütze (S) ruht, die Öffnungen (S1) aufweist, in der die Baugruppe befestigt ist; wobei die Halterungsbaugruppe Folgendes aufweist:
a) eine Befestigungsbaugruppe (1) und eine Einstellerbaugruppe (2), die angeordnet sind, um aneinander befestigt zu werden und die Stütze (S) an dem Flügel (G1) der Führung (G) zu befestigen; wobei die Einstellerbaugruppe (2) einer geführten Linearbewegung mit Bezug auf die Befestigungsbaugruppe (1) unterliegt, um sich an Flügel (G1) unterschiedlicher Dicke anzupassen; wobei die Befestigungsbaugruppe (1) und der Flügel (G1) mit einer frontalen Reibung aneinander anliegen;
b) eine sich nicht drehende Schraube (3), die an der Befestigungsbaugruppe (1) oder an der Stütze (S) montiert ist, um sie aneinander zu befestigen; und
c) ein Befestigungselement (4), das mit der Schraube (3) verbunden und in eine lange Öffnung (22) der Einstellerbaugruppe (2) aufgenommen ist, wodurch die geführte Bewegung der Einstellerbaugruppe (2) in der Befestigungsbaugruppe (1) ermöglicht wird; und dann zwischen ihnen die Einstellerbaugruppe (2) und die Befestigungsbaugruppe (1) zu befestigen.

2. Halterungsbaugruppe nach Anspruch 1, **dadurch gekennzeichnet, dass** die erwähnte Befestigungsbaugruppe (1) ein einzelnes Stück Blechmetall aufweist, das in einer "Z"-Form gefaltet ist, wobei einer von dessen Flügeln (11c) auf der Einstellerbaugruppe (2) ruht, während der andere Flügel (11a) eine polygonale Öffnung (10) aufweist, um die sich nicht drehende Schraube (3) aufzunehmen, und auf der Stütze (S) ruht, während der Kern (11b) an der Kante des entsprechenden Flügels (G1) der Führung (G) anliegt.

3. Halterungsbaugruppe nach Anspruch 2, **dadurch gekennzeichnet, dass** die erwähnte Einstellerbaugruppe (2) ein einzelnes Stück gefaltetes Blechmetalls aufweist, wobei die "L"-Form, deren kleinerer Flügel (21b) einen Griff aufweist, um die geführte Bewegung zu erleichtern, und deren größerer Flügel (21a) eine lange Öffnung (22) aufweist, um das Befestigungselement (4) aufzunehmen, und ein Fenster (23) zum Unterbringen der Befestigungsbaugruppe (1), in ihrer Endzone mindestens eine Erhöhung (24) aufweist, um die Flügel (G1) an unterschiedliche Dicken anzupassen.

4. Halterungsbaugruppe nach Anspruch 1, **dadurch gekennzeichnet, dass** sie Mittel (12) zum Erzeugen einer Kraft zwischen der Befestigungsbaugruppe (1) und der Stütze (S) aufweist, die, nachdem sie aneinander befestigt wurden, der frontalen Reibung zwischen der Befestigungsbaugruppe (1) und dem Flügel (G1) entgegenwirkt und dieselbe reduziert; wobei es sich bei den zuvor erwähnten Mitteln um Arme (12) handelt, die sich vom zuvor erwähnten Stück Blechmetall erstrecken und mit Bezug auf die Ebene des zuvor erwähnten Flügels (11 a) geringfügig geneigt ist; derart, dass beim Festziehen einer Mutter/Unterlegscheibe (T1) an der sich nicht drehenden Schraube (3), um zwischen ihnen die Befestigungsbaugruppe (1) und die Stütze (S) zu befestigen, der Kern (11b) geneigt ist, um sich von der Kante des Flügels (G1) zu trennen.

5. Halterungsbaugruppe nach Anspruch 2, **dadurch gekennzeichnet, dass** die erwähnte Befestigungsbaugruppe (1) ein einzelnes Stück Blechmetall ist, das in einer "Z"-Form gefaltet ist, wobei einer von dessen Flügeln (11c) auf der Einstellerbaugruppe (2) ruht, während der andere Flügel (11a) mit einer polygonalen Öffnung (10) versehen ist, um die sich nicht drehende Schraube (3) aufzunehmen, und auf der Stütze (S) ruht, während der Kern (11b) ein Fenster (13') definiert, um die Einstellerbaugruppe (2) unterzubringen, und an der Kante des entsprechenden Flügels (G1) der Führung (G) anliegt.

6. Halterungsbaugruppe nach Anspruch 5, **dadurch gekennzeichnet, dass** die erwähnte Einstellerbaugruppe (1) ein einzelnes Stück eines in "L"-Form gefalteten Blechmetalls aufweist, dessen kleinerer Flügel (21b) einen Griff umfasst, um eine geführte Bewegung zu erleichtern, und deren größerer Flügel (21a) die lange Öffnung (22) aufweist, um das Befestigungselement (4) aufzunehmen; mindestens eine Erhöhung (24) in seiner Kantenzone aufweist, um sich an Flügel (G1) unterschiedlicher Dicke anzupassen.

7. Halterungsbaugruppe nach einem der vorhergehenden Ansprüche, **dadurch gekennzeichnet, dass** der Flügel (11a) des Stücks Blechmetall eine Öffnung (10') aufweist und auf der Stütze (S) mit einer polygonalen Öffnung (S1') ruht, um die sich nicht drehende Schraube (3) aufzunehmen.

8. Halterungsbaugruppe nach einem der vorhergehenden Ansprüche, **dadurch gekennzeichnet, dass** die sich nicht drehende Schraube (3) und das Befestigungselement (4) Gewindeabschnitte sind, die von einem einzelnen Basisstück gebildet sind, wobei jeder von ihnen jeweilige Mutter-/Unterlegscheibensätze (T1), (T2) aufweist.

9. Halterungsbaugruppe nach einem der vorhergehenden Ansprüche, **dadurch gekennzeichnet, dass** die sich nicht drehende Schraube (3) in ihrem Kopf (31) eine Gewindeöffnung (33) trägt, in der sich das Befestigungselement (4) befindet, das eine unabhängige Schraube ist; wobei die Befestigungsbaugruppe (1) und die Einstellerbaugruppe (2) zwischen deren jeweiligen Köpfen (31), (42) gehalten werden.

## Revendications

1. Ensemble étrier, ajustable à l'épaisseur de l'aile d'un guide de levage ; du type qui a un étrier pour chaque aile (G1) du guide de levage (G), ledit guide (G) reposant sur un support (S) qui a des orifices (S1) dans lesquels est fixé l'ensemble ; dans lequel l'ensemble étrier a :
a) un ensemble de fixation (1) et un ensemble dispositif d'ajustement (2) agencés pour être fixés l'un à l'autre et le support (S) à l'aile (G1) du guide (G) ; l'ensemble dispositif d'ajustement (2) étant soumis à un mouvement linéaire guidé par rapport à l'ensemble de fixation (1) pour s'adapter à des ailes (G1) d'épaisseurs différentes; l'ensemble de fixation (1) et l'aile (G1) étant en butée l'un contre l'autre, avec frottement frontal ;
b) une vis non tournante (3) qui se monte sur l'ensemble de fixation (1) ou sur le support (S) pour les fixer l'un à l'autre ; et
c) un élément de fixation (4) qui, joint à la vis (3), est reçu dans un long orifice (22) de l'ensemble dispositif d'ajustement (2) permettant le mouvement guidé de l'ensemble dispositif d'ajustement (2) dans l'ensemble de fixation (1); et ensuite de fixer entre eux l'ensemble dispositif d'ajustement (2) et l'ensemble de fixation (1).

2. Ensemble étrier, selon la revendication 1, **caractérisé en ce que** l'ensemble de fixation (1) mentionné a une seule pièce de métal en feuille pliée en forme de « Z », dont l'une des ailes (11c) repose sur l'ensemble dispositif d'ajustement (2) tandis que l'autre aile (11a) a un orifice polygonal (10) pour recevoir la vis non tournante (3) et repose sur le support (S) tandis que le noyau (11b) vient en butée contre le bord de l'aile (G1) correspondante du guide (G).

3. Ensemble étrier, selon la revendication 2, **caractérisé en ce que** l'ensemble dispositif d'ajustement (2) mentionné a une seule pièce de métal en feuille pliée, la forme en « L » dont la plus petite aile (21b) a une poignée pour faciliter le mouvement guidé et dont la plus grande aile (21a) a un long orifice (22) pour recevoir l'élément de fixation (4) et une fenêtre (23) pour loger l'ensemble de fixation (1) ; ayant au moins une arête (24) dans sa zone d'extrémité pour s'adapter à des ailes (G1) d'épaisseurs différentes.

4. Ensemble étrier, selon la revendication 1, **caractérisé en ce qu'**il a des moyens (12) pour générer une force entre l'ensemble de fixation (1) et le support (S) qui, en les fixant l'un à l'autre, contrecarre et réduit le frottement frontal entre l'ensemble de fixation (1) et l'aile (G1) ; les moyens susmentionnés étant des bras (12) qui s'étendent de la pièce de métal en feuille susmentionnée et légèrement inclinés par rapport au plan de l'aile (11a) susmentionnée; de sorte que, en serrant un écrou/rondelle (T1) sur la vis non tournante (3) pour fixer entre eux l'ensemble de fixation (1) et le support (S), le noyau (11b) a tendance à se séparer du bord de l'aile (G1).

5. Ensemble étrier, selon la revendication 2, **caractérisé en ce que** l'ensemble de fixation (1) mentionné est une seule pièce de métal en feuille pliée en forme de « Z », dont l'une des ailes (11c) repose sur l'ensemble dispositif d'ajustement (2) tandis que l'autre aile (11a) est équipée d'un orifice polygonal (10) pour recevoir la vis non tournante (3) et repose sur le support (S) tandis que le noyau (11b) définit une fenêtre (13') pour loger l'ensemble dispositif d'ajustement (2) et vient en butée contre le bord de l'aile (G1) correspondante du guide (G).

6. Ensemble étrier, selon la revendication 5, **caractérisé en ce que** l'ensemble dispositif d'ajustement (1) mentionné a une seule pièce de métal en feuille pliée en forme de « L », dont la plus petite aile (21b) comprend une poignée pour faciliter le mouvement guidé et dont la plus grande aile (21a) a le long orifice (22) pour recevoir l'élément de fixation (4) ; ayant au moins une arête (24) dans sa zone de bord pour s'adapter à des ailes (G1) d'épaisseurs différentes.

7. Ensemble étrier, selon l'une des revendications précédentes, **caractérisé en ce que** l'aile (11a) de la pièce de métal en feuille a un orifice (10') et repose sur le support (S) avec un orifice polygonal (S1') pour recevoir la vis non tournante (3).

8. Ensemble étrier, selon l'une des revendications précédentes, **caractérisé en ce que** la vis non tournante (3) et l'élément de fixation (4) sont des parties filetées formées d'une seule pièce de base, chacun d'eux ayant des ensembles écrou/rondelle (T1), (T2) respectifs.

9. Ensemble étrier, selon l'une des revendications précédentes, **caractérisé en ce que** la vis non tournante (3) porte dans sa tête (31) un orifice fileté (33) dans lequel se trouve l'élément de fixation (4) qui est une vis indépendante ; l'ensemble de fixation (1) et l'ensemble dispositif d'ajustement (2) sont maintenus entre leurs têtes (31), (42) respectives.
